# EUROPEAN PATENT APPLICATION

(11) **EP 4 310 052 A1**
(43) Date of publication of application: **24.01.2024**
(21) Application number: 22185988.7
(22) Date of filing: 20.07.2022
(51) Int. Cl.: C01B 33/14, C08H 7/00, C08L 97/00, C09D 197/00

(54) **MODIFIED LIGNIN IN THE MANUFACTURE OF ORGANIC-INORGANIC HYBRID MATERIALS**

(71) Applicant: VITO NV, 2400 Mol (BE)
(72) Inventor: Vendamme, Richard, 2400 Mol (BE); Rubens, Maarten, 2400 Mol (BE)
(74) Representative: Arnold & Siedsma

(57) **Abstract**

Organic-inorganic hybrid materials using lignin as the organic phase for the synthesis of thin films are described. These hybrid materials are prepared through the known sol-gel method whereby a metal-oxide precursor and alkoxysilane functionalized lignin are used and subsequently processed to obtain coatings and thin films with a high content in lignin.

## Description

### Field of the invention

Organic-inorganic hybrid materials using lignin as the organic phase for the synthesis of thin films are described. These hybrid materials are prepared through the known sol-gel method whereby a metal-oxide precursor and alkoxysilane functionalized lignin are used and subsequently processed to obtain coatings and thin films with a high content in lignin.

### Background

Lignin is the second most abundant natural polymer on earth, accounting for 15-30% of the earth's biomass. Native lignins are complex heterogeneous aromatic polymers stemming from the radical polymerization of three aromatic alcohols called monolignol units: p-coumaryl, confineryl, and sinapyl alcohols. Depending on the type of lignocellulosic species the proportions of monolignols can vastly differ. The individual monolignols are bonded by different bonding motifs, with β-O-4 ether linkages being the predominant linker type. Lignin is the most sustainable source of aromatic compounds but only limited used in specialty products

Lignin has not a defined structure, and its structure depends not only on its botanical source but also on the used isolation and post-treatment process. In addition, depolymerization or fractionation of the lignin yields mixtures with increased content in monomers, dimers, and low molecular weight oligomers. Hence, depending on all these factors, the molecular weight and amount of aromatic and aliphatic hydroxyl groups can vastly differ. However, it will always have a repeating unit or monomer derived from the monolignols it is synthesized from.

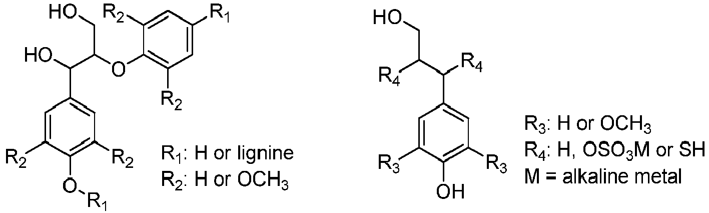

The lignin can be any technical lignin such as Kraft Lignin, lignosulfonate, organosolv lignin, or a combination thereof. In addition, the employed lignin can be fractionated or depolymerized by one of the following methods: base-catalyzed depolymerization, hydrogenolysis, pyrolysis, oxidation, acidolysis, or enzymatic degradation. The lignin may be further fractionated using membrane separation or solvent extractions. Ideally, lignin will have to be comprised out of oligomers and have a molecular weight between 100 and 100000 with a hydroxyl functionality between 0.1 and 25 mmol/g.

It is an object of the present invention to provide the use of lignin as the organic phase for the synthesis of Organic-Inorganic hybrid materials, more in particular as alkoxides in a sol-gel synthesis. Thereto the monolignols of lignin needs to be modified to enhance its reactivity towards the metal oxide precursor which co-react together in a sol-gel process forming the hybrid organic-inorganic material. To that end, and as further detailed hereinbelow, reactive silanes are introduced on the lignin by fully or partly reacting the aromatic and aliphatic hydroxide groups. Possible synthetic methods include the use of functionalized alkoxysilanes that allow for modification of the lignin through but are not limited to, esterification, the nucleophilic substitution of chlorosilanes, allylation, and subsequent silylation, carbamate formation, the Mannich reaction, and ring-opening of epoxy silanes.

### Summary of the invention

In a first aspect the present invention provides a material, in particular an organic-Inorganic hybrid materials; more in particular a lignin based organic-Inorganic hybrid thin film material; comprising the reaction product of a composition comprising an alkoxysilane functionalized lignin according to Formula (I) with a hydrolyzable metal-oxide precursor.

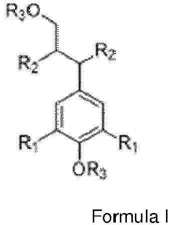

Wherein;
R₁ independently represents H, C₁₋₆alkyl-phenyl or O-C₁₋₆alkyl; in particular H, phenylpropane or OCH₃: more in particular H or O-C₁₋₆alkyl; even more in particular H or OCH₃;
R₂ independently represents H, OSO₃M or SH 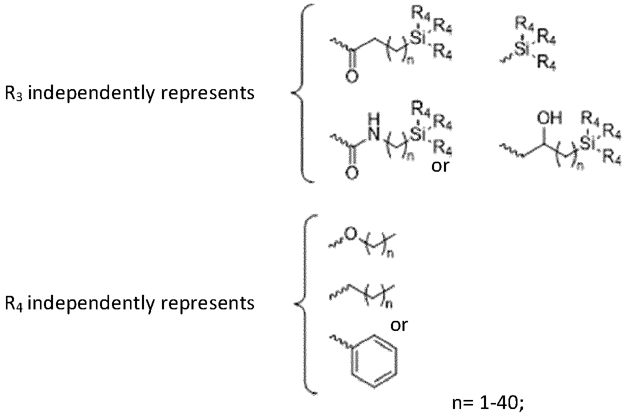
M represent an alkaline metal; in particular Mg or Ca; and
wherein at least one R₄ is - O-C₁₋₄₁alkyl.

In one embodiment, the hydrolysable metal-oxide precursor used has the formula MXn, where: n is 2 to 4; M is a metal selected from the group consisting of Si, Ti, Zr, Al, B, Sn, and V; and X is a hydrolysable moiety selected from the group C₁₋₆alkoxy, Cl, Br, I, hydrogen, and C₁₋₆alkoxyacryl.

In one embodiment R₁ independently represents H, C₁₋₆alkyl-phenyl or O-C₁₋₆alkyl; wherein at least one of R₁ represents C₁₋₆alkyl-phenyl or O-C₁₋₆alkyl; in particular R₁ independently represents H, phenylpropane or OCH₃; wherein at least one of R₁ represents phenylpropane or OCH₃: more in particular R1 independently represents H or O-C₁₋₆alkyl; even more in particular H or OCH₃; wherein at least one of R₁ represents O-C₁₋₆alkyl, more in particular OCH₃.

In a second aspect, the present invention provides a method for obtaining the materials as herein defined, said method comprising the hydrolysis and condensation of a composition comprising at least one alkoxysilane functionalized lignin according to Formula (I), at least one hydrolysable metal oxide precursor, water, at least one solvent, and optionally a catalyst. The composition may further comprise amino-alcohols and large molecular weight alcohols, they are used as additives to influence the surface and optical properties of the films. But also coloured pigments, anti-fingerprint agents, ceramic hard particles and conductive particles, antimicrobial additives, chelating agents such as citric acid etc... can be added to provide further properties to the films / coatings obtainable using the alkoxysilane functionalized lignins according to the invention.

In the methods according to the invention the presence of a catalyst is optional. If present it can be an acid or a base, but is preferably an acid such as Acetic acid, HBr, or HCl. In one embodiment for obtaining the materials as herein defined, comprises the hydrolysis and condensation of a composition comprising at least one alkoxysilane functionalized lignin according to Formula (I), at least one hydrolysable metal oxide precursor, water, at least one solvent, and an acidic catalyst.

In the methods according to the invention the solvent is preferably a water miscible organic solvent; in particular an inert water miscible organic solvent such as for example THF, DMF, chloroform, dioxane, ethanol, methanol and DMSO.

In performing the methods according to the invention, a first non-aqueous solution comprising the alkoxysilane functionalized lignin, is typically mixed with the hydrolysable metal oxide precursor to form a dispersion. The hydrolysable metal oxide precursor can be added pure or as a second solution comprising the hydrolysable metal oxide precursor to form a dispersion.

In an embodiment according to the invention this second solution is a solution of said hydrolysable metal oxide precursor in a water miscible solvent, such as for example as tetrahydrofuran, 2-methyl tetrahydrofuran, 1,4-dioxane, toluene, ethyl acetate, acetone, diethyl ether, methyl ether ketone, and the like. In another embodiment said second solution further comprises a catalyst, accelerating the sol-gel formation. The catalyst can be an acid or a base, but is preferably an acid such as HCl. In a particular embodiment the concentration of the hydrolysable metal oxide precursor in said second solution is high, i.e. comprising at least 80 %wt of the hydrolysable metal oxide precursor.

The thus obtained dispersion can subsequently be used to coat a substrate, for example using spin coating, and allowed to cure. Curing is simply performed at an elevated temperature, such as at temperatures of 50 to 300° C., and preferably from 60 to 180° C., and more preferably from 60 to 90° C.

Thus in a further aspect the present invention provides a method for coating a substrate with lignin based organic-Inorganic hybrid material, said method comprising the steps of:
- providing a sol derived from an organic solvent comprising an alkoxysilane functionalized lignin according to Formula (I) ;
- addition of the metal precursor (pure or in high concentration)
- adding a second solution comprising a water and optional a catalyst
- incubating the thus obtained mixture to from a dispersion;
- coating a substrate with said dispersion; and
- curing said dispersion upon said substrate, wherein said resulting coating is transparent to visible light with a transmittance of at least 85% at a thickness of up to 205 nm.

### Description of the Figures

Figure 1 - Weightloss coatings after solvent treatment in DMF, THF and Hexane.

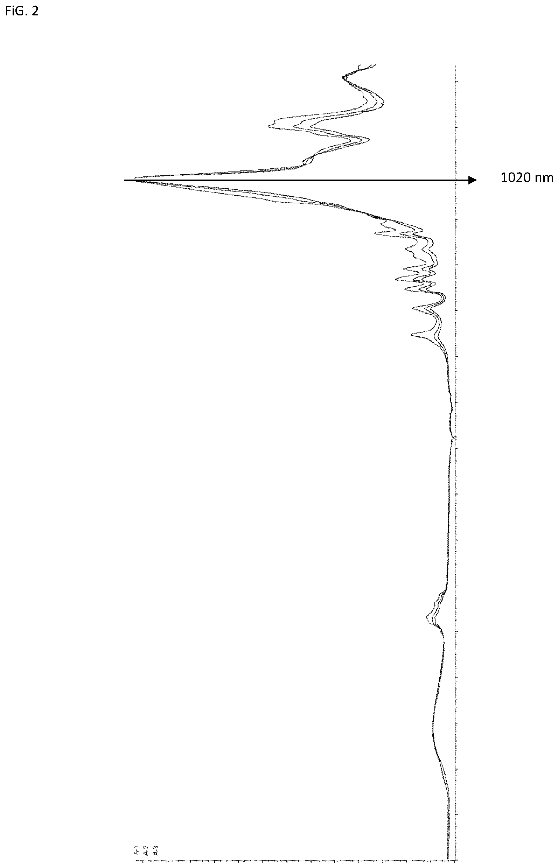

Figure 2 - Infrared spectra of the lignin hybrid thin films with compositions A-1, A-2, and A-3.

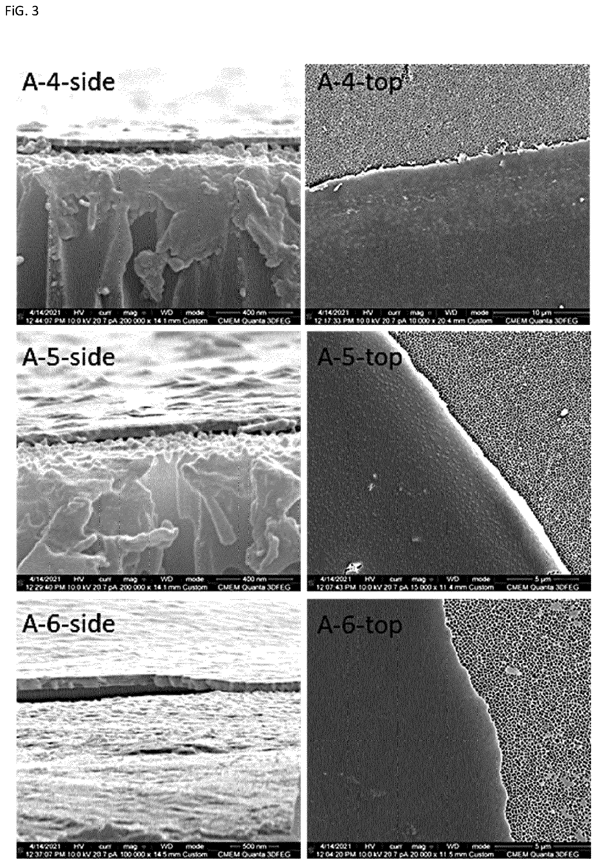

Figure 3 - SEM top and side view of thin-film lignin hybrid materials according to the invention, showing thicknesses between 36 and 120 nm.

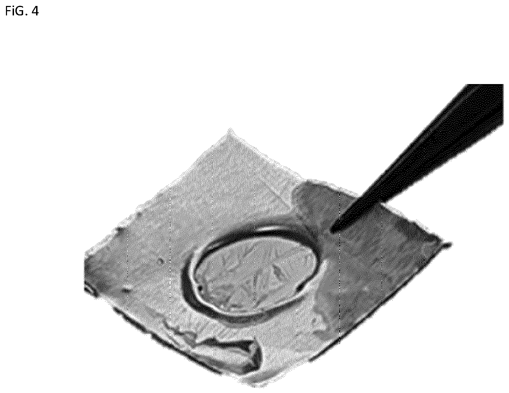

Figure 4 - Picture of a freestanding self-supporting lignin hybrid thin film covering an 8 mm diameter circular cutout.

### Detailed description of the invention

As mentioned herein before it is an object of the present invention to provide the use of alkoxysilane functionalized lignin as the organic phase for the synthesis of Organic-inorganic hybrid materials. Thereto the functionalized alkoxysilanes are introduced on the lignin by fully or partly reacting the aromatic and aliphatic hydroxide groups present within the depolymerized lignin source materials, comprising mixtures of monomers, dimers, and low molecular weight oligomers.

As the hydrolysis of an alkoxy group is needed for the co-condensation of an alkoxysilane functionalized lignin in the inorganic network, the alkoxysilanes used in the synthesis of the alkoxysilane functionalized lignin should contain at least two alkoxy groups; in particular two or three alkoxy groups and zero or one alkyl group.

Non-limited examples of alkoxysilanes used for the modification of lignin are 4-(trimethoxysilyl)butanoic acid, 4-(triethoxysilyl)butanoic acid, 3-chloropropyltrimethoxysilane, 3-chloropropyltriethoxysilane, 3-chloropropylmethyldimethoxysilane, 3-chloropropylmethyldiethoxysilane, 3-chloromethyltrimethoxysilane, 3-chloromethyltriethoxysilane, 3-chloromethylmethyldimethoxysilane, 3-chloromethylmethyldiethoxysilane, trimethoxysilane, triethoxysilane, methyldimethoxysilane, methyldiethoxysilane, isocyanatomethyltrimethoxysilane, isocyanatomethyltriethoxysilane, 3-isocyanatopropyltrimethoxysilane, 3-isocyanatopropyltriethoxysilane, 3-isocyanatopropylmethyldimethoxysilane, 3-isocyanatopropylmethyldiethoxysilane, (3-glycidyloxypropyl)trimethoxysilane, (3-glycidyloxypropyl)triethoxysilane, (3-glycidyloxypropyl)methyldimethoxysilane, (3-glycidyloxypropyl)methyldiethoxysilane, (3-aminopropyl)trimethoxysilane, (3-aminopropyl)triethoxysilane, (3-aminopropyl)methyldimethoxysilane, (3-aminopropyl)methyldiethoxysilane or a mixture thereof containing a least two alkoxysilanes with the same functionality.

The alkoxysilane functionalized lignin obtained, can generally be presented as follows,

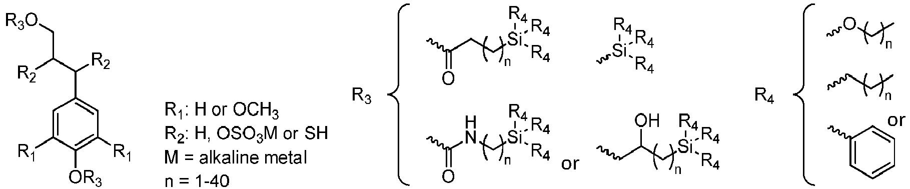

Wherein at least one R₄ is - O-C₁₋₄₁alkyl, and its use in the synthesis of an hybrid inorganic-organic thin film or coating, can generally be presented according to Scheme 1.

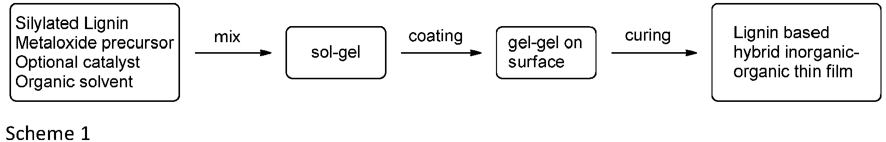

The functionalized lignin is mixed with a metal-oxide precursor in a weight ratio of 1:99 to 99:1 together with water and optionally a catalyst, in an organic solvent to perform the art known sol-gel method.

Specifically, preferred examples of metal-oxide precursors are metal alkoxides such as tetraethyl orthosilicate, zirconium butoxide, and titanium butoxide but not limited to. Other know metal-oxide precursors used in the sol-gel process contain at least two alkoxide groups that might be used such as diethoxydimethylsilane, dimethoxy-diphenyl silane, and dimethoxy-dimethyl silane. A combination of multiple metal-oxide precursors is also possible.

A solvent is required to solubilize the lignin and for the processing of the material. Lignin is dissolved in a concentration of 0.1 to 5 wt%, with a preference for 0.25 to 2 wt% for coating of nanothick films by spin-coating. Solvents include, but are not limited to polar organic solvents such as tetrahydrofuran, 2-methyl tetrahydrofuran, 1,4-dioxane, toluene, ethyl acetate, acetone, diethyl ether, methyl ether ketone, or a combination thereof.

Water and optionally a catalyst are required for the sol-gel process to proceed. Typically water is used in the molar ratio range of alkoxide to water between 1:0.1 to 1:10 with a preference for equimolar conditions. A catalyst might be present and is preferably an acidic catalyst, such as but not limited to hydrochloric acid, acetic acid, or nitric acid and is typically used in a molar ratio of 0.001:1 to 0.1:1 with a preference for 0.025:1 to 0.075:1 of catalyst to an alkoxide. The mixture is stirred at a temperature range between 0 °C and 80 °C, preferably 30 °C to 50 °C for a minimum of 10 minutes, but preferably for 1 hour. Too low temperatures or too short a reaction time may lead to an incomplete formation of the sol.

With this method, it is possible to arbitrarily adjust the thickness of the nanocoating by altering the concentrations of the metal oxide precursor and lignin in the formulation to be used for spin-coating, the spin speed, and spin time. It is preferable that part of the sol-gel reaction is performed during the formation of the thin film layer and more preferable that the gel-gel reaction is advanced during and after the formation of the thin film later so that a thin film of high uniformity is obtained.

After the formation of the thin film a post-curing step is required which happens at a temperature range between 25 and 150 °C, preferably between 50 °C and 90 °C for a minimum of 1 hour, but preferable for 3 hours. The film can directly be formed on the substrate of interest such as but is not limited to glass, metals, or wood.

The thin-film application can be performed on an undercoat layer and the thin film can afterward be separated from the undercoat layer by selective dissolution and transferred to another substrate. This step is not always required in the method of manufacturing the hybrid lignin organic-inorganic films but is nevertheless demonstrated in this invention.

The hybrid lignin organic-inorganic films obtained by the described method of manufacturing the film thickness can be regulated at the nano level or less, with thickness in the range of 500 to 5 nm possible, but preferably between 150-20 nm. The thinner the film thickness or the larger the surface area, the more likely the thin film is damaged from a crack or similar deformation. However, by employing the described method of manufacturing hybrid thin films containing lignin, films with a surface area of 1 cm², and further 10 cm² or more can be produced.

It is also an object to provide the thin film layers of the alkoxysilane functionalized lignin monomers according to the invention as part of a composite material, such as comprising a further protective layer on top of the hybrid lignin organic-inorganic films obtained by the described method, or as part of a sandwich material wherein the hybrid lignin organic-inorganic films is sandwich between two layers of such protective films.

In addition, self-supporting free-standing hybrid lignin inorganic-organic thin films with excellent durability and strength can be obtained by employing the method of manufacturing described in this invention.

### Examples

### Example 1

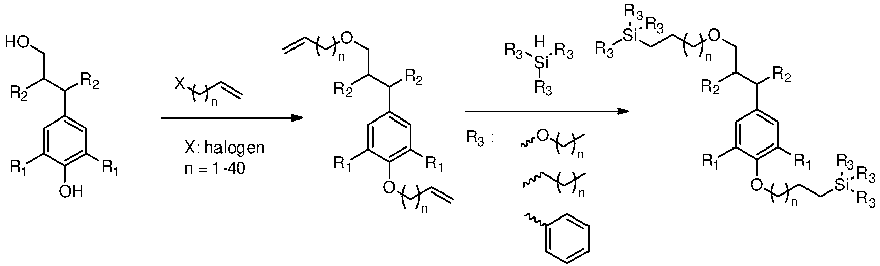

General synthesis scheme in the synthesis of the alkoxysilane functionalized lignin's R₁ and R₂ are defined as for the alkoxysilane functionalized lignin according to Formula (I) above; R₃ is independently selected from the structures above, wherein at least one R₃ represents

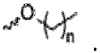

As a representative example, dried Kraft lignin (molecular weight of 100-10000) was functionalized with alkoxysilanes in a two-step process. First the allylation of the lignin by treatment of the aliphatic and aromatic hydroxy groups with allyl bromide (X = Br). In the second and final step, a hydrosilylation of the allylated lignin by treatment with methyl-dimethoxy silane (DSM) (one R₃ is methyl and two R₃ substituents are methoxy) in the presence of Pt(0) complex that acts as a catalyst.

Moisture-free Kraft lignin (10g, 56.5 mmol OH, 1equiv.) and potassium carbonate (11.7g, 138.2 mmol, 1.5 equiv.) are mixed under an inert and moisture-free atmosphere in acetone (100 mL). After mixing for 1 hour at 40 °C, allyl bromide is added dropwise with the help of a dropping funnel over 1 hour while gently increasing the temperature to 70 °C under reflux and the reaction mixture is stirred for 24h. Next, the mixture was concentrated under vacuum and precipitated in 300 mL of acidified water (2 v/v % HCI) and filtered off. The obtained solids were copiously washed with water and dried in a vacuum for 24h to obtain 5.8 g of allylated lignin.

In the second step, allylated lignin (5g, 18.9 mmol allyl functionality) was dissolved in dry toluene under a moisture-free and inert atmosphere. Next, the Karstedt's catalyst (5 mg, 100 ppm) was added together with the dropwise addition of methyl-dimethoxy silane (DSM) with the help of a dropping funnel under an inert atmosphere. The mixture was stirred at 90 °C for 24 hours. Finally, the solvent was removed under vacuum and the remainder solid dried without purification to obtain the alkoxysilane functionalized lignin.

**Table 1 - Formulation of lignin hybrid organic-inorganic materials**

| Composition thin film | Si(Oet)₄ | A-lignin | THF | HCl (aq., 2.7M) |
|---|---|---|---|---|
| A-1 | 50 wt% 40 mg | 50 wt% 40 mg | 98 wt% 3920 mg | 19 mg |
| A-2 | 67 wt% 54 mg | 33 wt% 26 mg | 98 wt% 3920 mg | 22 mg |
| A-3 | 75 wt% 60 mg | 25 wt% 20 mg | 98 wt% 3920 mg | 24 mg |

Next, the alkoxysilane functionalized lignin is dissolved in tetrahydrofuran (manufactured by Merck, >99%) together with tetraethyl orthosilicate (manufactured by Merck, 98% reagent grade), deionized water, and hydrochloric acid as shown in Table 1. After reacting for 1 hour at 40 °C, the solution is filtered (0.4 µm) and spin-coated on a glass substrate, thereby configuring a thin film layer rich in lignin. The spin coating was carried out at 3000 rpm for 1.40 min. The final curing proceeded at 70 °C for 3 hours.

### Contact angle test

The formulation described in Table 1 was spin-coated on glass substrates. The contact angle was determined through a static test whereby a water droplet is placed on the surface and the contact angle is measured through a goniometer. Five droplets are placed randomly on each surface and the average and standard deviation are reported in Table 2. The higher the lignin content in the coatings, the more hydrophobic the surface is, while an increase in silica lowers this hydrophobicity. The reference, which is an untreated glass surface is hydrophilic. This shows that the coating can arbitrarily influence the level of hydrophobicity of the treated glass by changing the silica oxide precursor in the formulation.

**Table 2 - Contact angle**

| Composition thin film | Silica content coating | Average contact angle | Standard deviation |
|---|---|---|---|
| Untreated glass surface | n/a | 19.8 | 8.2 |
| A-1 | 23 wt% | 105.3 | 0.4 |
| A-2 | 37 wt% | 100.8 | 0.8 |
| A-3 | 45 wt% | 97.0 | 0.7 |

### Solvent stability test

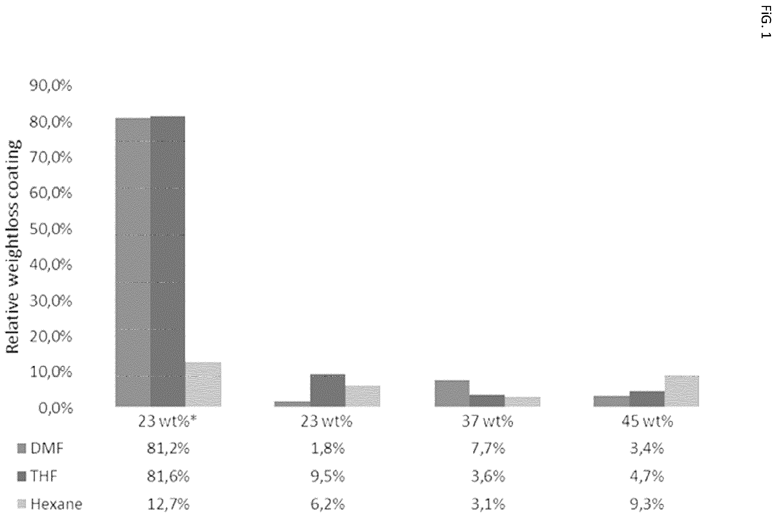

The same coatings were also subjected to solvent stability test both in polar and apolar solvents such as hexane, tetrahydrofuran, and dimethylformamide. As a reference, pristine untreated lignin was used to highlight the importance of alkoxysilane functionalization for the stability of hybrid materials. The coatings were submerged in the solvent for 1 hour at room temperate, and the weight difference before and after was determined. All coatings (A-1, A-2, A-3) showed good solvent stability with a weight loss of less than 10%, while the reference showed a weight loss of up to 80% in tetrahydrofuran and dimethylformamide, equaling almost the mass of the organic lignin phase in the coating (Figure 1).

### Fourier-transform infrared spectroscopy

Infrared spectra of the lignin hybrid thin films were obtained in the case of compositions A-1, A-2, and A-3. As a result of the good co-condensation between alkoxysilane functionalized lignin and metal oxide precursor virtually all the alkoxysilane is reacted into siloxane bonds, with the result of a strong peak at 1020 cm⁻¹ **(Error! Reference source not found.).** This confirmed that the organic lignin polymer is well incorporated in the hybrid inorganic-organic silica material.

### Example 2

A Poly(sodium-4-styrene sulfonate) (PSS) layer of thickness of 100 nm was formed on a glass substrate by a spin-coating method. The PSS (manufactured by Alfa Aesar) as user herein had an average molecular weight (Mw) of about 70 000 g/ mol and high solubility in water.

**Table 3 - Formulation of lignin hybrid organic-inorganic materials**

| Composition thin film | Si(Oet)₄ | A-lignin | THF | HCl (aq., 2.7M) |
|---|---|---|---|---|
| A-4 | 50 wt% 40 mg | 50 wt% 40 mg | 99 wt% 7920 mg | 19 mg |
| A-5 | 50 wt% 40 mg | 50 wt% 40 mg | 98 wt% 3920 mg | 19 mg |
| A-6 | 50 wt% 40 mg | 50 wt% 40 mg | 96 wt% 1920 mg | 19 mg |

Next, a composition of lignin hybrid organic-inorganic material was prepared by dissolving alkoxy functionalized lignin prepared as described earlier in THF in three different concentrations together with tetraethyl orthosilicate (manufactured by Merck, >99%) together with tetraethyl orthosilicate (manufactured by Merck, 98% reagent grade), deionized water and hydrochloric acid as shown in Table 3. After reacting for 1 hour at 40 °C, each solution is filtered (0.4 µm) and spin-coated on the PSS layer on the glass substrate, thereby configuring a thin film layer rich in lignin. The spin coating was carried out at 3000 rpm for 1.40 min. The final curing proceeded at 70 °C for 3 hours.

Next, the glass substrate layer-PSS and layer-lignin-silica films were dipped into the water. The PSS layer was dissolved, whereby the glass substrate and the lignin-silica thin film were separated from each other. The lignin-silica thin films were transferred to the surface of a porous alumina membrane (anodisc 25, manufactured by Whatman ) and subjected to analysis.

### Scanning electron microscopy

The thin films were transferred to porous alumina support and observed by scanning electron microscopy. The obtained results were shown in **Error! Reference source not found.** and each image shows the film side surface and top surface. From these results, it was confirmed that the film was uniform and free from cracks.

Layer thickness is controllable by formulation concentration as shown in **Error! Reference source not found.**. Layer thickness can vary from 120 to 30 nm with lower concentrations yielding smaller film thicknesses.

### Energy-dispersive X-ray spectroscopy (EDX)

An EDX spectrum of sample A-5 was measured to determine the weight ratio of elemental silicon and carbon. Four different spots were analyzed, yielding an average Si/C weight ratio of 0.20 with a standard deviation of 0.02. This is close to the theoretical ratio of 0.25 if all metal oxide precursor reacts with all the lignin (Table 4). Thus it is confirmed that the structure of the lignin hybrid thin films is substantially complete.

**Table 4 - Composition ratio silicon and carbon different location of thin film A-5**

| Composition thin film | Si / C wt% ratio |
|---|---|
| Theoretical | 0.25 |
| Spot - 1 | 0.22 |
| Spot - 2 | 0.18 |
| Spot - 3 | 0.18 |
| Spot - 4 | 0.23 |

### Freestanding self-supporting films

The thin film A-5 was removed from the PSS underlayer and transferred to an aluminum plate with an 8 mm circular cutout. The film was transferred in such a manner that the cutout was completely covered by the lignin thin film. The obtained film of 60 nm thick proved to be self-supporting as the cutout was completely covered and no cracks or damages were observed **(Error! Reference source not found.).** The wrinkles are stemming from the transferring process of the film from the water surface to the aluminum plate.

## Claims

1. A material comprising the reaction product of a composition comprising an alkoxysilane functionalized lignin according to Formula (I) with a hydrolysable metal-oxide precursor. 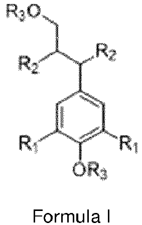 Wherein;
R₁ independently represents H, C₁₋₆alkyl-phenyl or O-C₁₋₆alkyl;
R₂ independently represents H, OSO₃M or SH 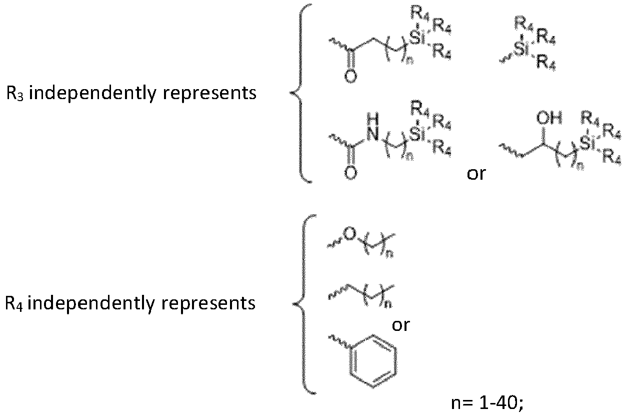 wherein at least one of R₄ is- O-C₁₋₄₁alkyl and
M represent an alkaline metal; in particular Mg or Ca.

2. The material of claim 1 wherein the hydrolysable metal-oxide precursor has the formula MXn, where: n is 2 to 4; M is a metal selected from the group consisting of Si, Ti, Zr, Al, B, Sn, and V; and X is a hydrolysable moiety selected from the group C₁₋₆alkoxy, Cl, Br, I, hydrogen, and C₁₋₆alkoxyacryl.

3. A method for obtaining a material according to claim 1; said method comprising the hydrolysis and condensation of a composition comprising at least one an alkoxysilane functionalized lignin according to Formula (I), at least one hydrolysable metal oxide precursor, water, at least one solvent, and optionally a catalyst.

4. The method according to claim 3, wherein the catalyst can be an acid or a base, but is preferably an acid such as Acetic acid, HBr, or HCl.

5. The method according to claim 3, wherein the solvent is a water miscible organic solvent; in particular an inert water miscible organic solvent such as for example THF, DMF, and DMSO.

6. A method for coating a substrate with a material according to claim 1 comprising the steps of:
a. providing a sol derived from a water comprising an alkoxysilane functionalized lignin according to Formula (I) ;
b. adding a second solution comprising a catalyst and at least one hydrolyzable metal oxide precursor to said sol;
c. incubating the thus obtained mixture to from a dispersion;
d. coating a substrate with said dispersion; and
e. curing said dispersion upon said substrate, wherein said resulting coating is transparent to visible light with a transmittance of at least 85% at a thickness of at least 5 µm.

7. The method according to claim 6, wherein the catalyst can be an acid or a base, but is preferably an acid such as HCl.

8. The method according to claim 6, wherein the incubation step c is performed at a temperature between 0 °C and 80 °C, preferably 30 °C to 50 °C, for a minimum of 10 minutes, but preferably for 1 hour.

9. The method according to claim 6, wherein the curing can be carried out at temperatures of 50 to 300° C., and preferably from 60 to 180°C, and more preferably from 60 to 90°C.

10. A hybrid lignin organic-inorganic film obtained by the method according to any one of claims 3 to 9 with a thickness in the range of 5-500 nm possible, but preferably between 20-150 nm.
